# EUROPEAN PATENT APPLICATION

(11) **EP 4 568 236 A1**
(43) Date of publication of application: **11.06.2025**
(21) Application number: 24199663.6
(22) Date of filing: 11.09.2024
(51) Int. Cl.: H04N 7/14

(54) **WIRELESS MULTI-STREAM BIDIRECTIONAL VIDEO PROCESSING SYSTEM**

(30) Priority: 07.12.2023 TW 112147750
(71) Applicant: Magic Control Technology Corporation, New Taipei City 236658 (TW)
(72) Inventor: LIU, Pei-Chung, Taipei City 235 (TW)
(74) Representative: Kador & Partner Part mbB

(57) **Abstract**

The present invention is related to a wireless multi-stream bidirectional video processing system (1) including: a video input and output device (200) that receives at least one camera video from at least one camera device and performs first processing to the at least one camera video to become a video information (D); and a video processing device (100) that wirelessly communicates with the video input and output device to receive the video information, performs second processing to the video information to become a plurality of output videos (D'), and transmits the output videos to a host device (12), wherein the host device outputs at least one display video (DI), and wherein the wireless multi-stream bidirectional video processing system processes the at least one display video to become a device video, and displays the device video on a display device (14b) connected to the wireless multi-stream bidirectional video processing system.

## Description

### BACKGROUND OF THE INVENTION

### 1. Field of the Invention

The present invention relates to a multi-stream bidirectional video processing system, particularly a multi-stream bidirectional video processing system for bidirectional data transmission.

### 2. The Prior Arts

In video conferencing, using wireless connection allows users to set up and adjust the position of the camera device more conveniently and freely.

However, in a video conference, it is usually necessary to display videos from multiple camera devices simultaneously or to perform simple processing to the videos of the camera devices, so as to facilitate the conference. In addition, after processing, there is also a need to directly and conveniently play the video.

Therefore, it is necessary to provide a method that can efficiently process the videos of multiple camera devices simultaneously and transmitting information in bidirectional directions.

In addition, after using a computer to receive videos from multiple camera devices, there is often a need to display the images on a large screen or television. The use of wireless connections allows users to set up and adjust the location of the computer more conveniently and freely.

Therefore, there is a need to provide a multi-stream bidirectional video processing system that has the bidirectional video processing function of receiving videos from multiple camera devices and transmitting computer-processed images to display devices (for example, display devices with large screens).

### SUMMARY OF THE INVENTION

In order to achieve the purpose of effectively solving the above problems, the present invention proposes a wireless multi-stream bidirectional video processing system comprising: a video input and output device receiving at least one camera video from at least one camera device and performing a first processing to the at least one camera video to become a video information; and a video processing device wirelessly communicating with the video input and output device to receive the video information, performing a second processing to the video information to become a plurality of output videos, and transmitting the output videos to a host device, wherein the host device outputs at least one display video to the video processing device, and wherein the wireless multi-stream bidirectional video processing system processes the at least one display video to become a device video, and displays the device video on a display device connected to the wireless multi-stream bidirectional video processing system.

Preferably, the video processing device provides a plurality of endpoints for the host device according to a quantity of the output videos and the at least one display video, so as to transmit the output videos to the host device and receive the at least one display video from the host device, and the host device generates the at least one display video according to the output videos.

Preferably, the video processing device comprises: a wireless communication unit wirelessly receiving the video information from the video input and output device and transmitting a display information to the video input and output device; an image processing unit performing the second processing to the video information to become the output videos; a USB control unit receiving the output videos, reporting an endpoint information to the host device according to the output videos, and receiving the at least one display video, so as to provide a plurality of endpoints for the host device according to the quantity of the output videos and the at least one display video; a connection port unit receiving the output videos from the USB control unit to transmit the output videos to the host device, and receiving the at least one display video from the host device to transmit the at least one display video to the USB control unit; and a mode control unit adjusting the at least one display video received from the host device to become the display information.

Preferably, the image processing unit of the video processing device includes a video processor, a neural network processor, a memory, and a storage unit, and the video processor and the neural network processor use a program stored in the storage unit to perform the processing, and the memory is used to store the at least one video and the output videos, wherein the processing is based on results of AI computing of the neural network processor, and wherein the AI computing includes at least one of edge detection, image segmentation, voice direction detection, feature extraction, capturing body shapes, identifying persons, and arranging an image output based on the direction of human voices.

Preferably, the mode control unit includes: a video conversion unit for adjusting the at least one display video, wherein the mode control unit receives the at least one display video from the USB control unit, and wherein the adjustment includes adjusting a format of the at least one display video and compressing the at least one display video after the format adjusting into the at least one display information, so as to facilitate wireless transmission.

Preferably, before the mode control unit adjusts the at least one display video, the image processing unit of the video processing device performs a third processing to the at least one display video, the third processing of the at least one display video includes at least one video display mode, the image processing unit of the video processing device performs the third processing to the at least one display video according to the video display mode that is selected, and the video display mode includes picture-in-picture, side-by-side picture, picture cropping, picture overlapping, picture zoom-in and zoom-out, and original picture.

Preferably, the display device is connected to the video processing device, the third processing further includes processing the at least one display video to become the device video, and the video processing device further includes: a video input controller for controlling a video received from another host device; a video output controller for controlling the device video output to the display device; a video input connection port for receiving the video from the another host device to transmit the video to the video input controller; and a video output connection port for receiving the device video from the image processing unit to transmit the device video to the display device.

Preferably, the second processing includes at least one video display mode, the image processing unit of the video processing device performs the second processing to the at least one video according to the video display mode that is selected, and the video display mode includes picture-in-picture, side-by-side picture, picture cropping, picture overlapping, picture zoom-in and zoom-out, and original picture.

Preferably, the second processing further includes: a format processing for converting a format of the received at least one video into a format that complies with a USB video class, so as to allow the connection port unit to transmit the output videos; and a resolution processing for converting a resolution of the received at least one video into a resolution consistent with the host device.

Preferably, the display device is connected to the video input and output device, the video input and output device includes: a wireless communication unit for wirelessly transmitting the video information to the video processing device and receiving the display information from the video processing device; an image processing unit for performing the first processing to the at least one camera video to become the video information, and performing a fourth processing to the display information to become the device video; a video input controller for controlling the received at least one camera video; a video output controller for controlling the device video that is output to the display device; a video input connection port for receiving the at least one camera video from the at least one camera device to transmit the at least one camera video to the video input controller; and a video output connection port for receiving the device video from the video output controller to transmit the device video to the display device.

Preferably, the image processing unit of the video input and output device includes a video processor, a neural network processor, a memory, and a storage unit, and the video processor and the neural network processor use a program stored in the storage unit to perform the processing, and the memory is used to store the at least one camera video and the device videos, wherein the processing is based on results of AI computing of the neural network processor, and wherein the AI computing includes at least one of edge detection, image segmentation, voice direction detection, feature extraction, capturing body shapes, identifying persons, and arranging an image output based on the direction of human voices.

Preferably, the first processing and the fourth processing include at least one video display mode, the image processing unit of the video input and output device performs the first processing and the fourth processing according to the video display mode that is selected, and the video display mode includes picture-in-picture, side-by-side picture, picture cropping, picture overlapping, picture zoom-in and zoom-out, and original picture.

In order to enable those familiar with the art to understand the purpose, characteristics and effects of the present invention, the present invention is described in detail as follows through the following specific embodiments and in conjunction with the attached drawings.

### BRIEF DESCRIPTION OF DRAWINGS

FIG. 1 is a schematic diagram of a conventional wireless video transmission system.
FIG. 2 is a schematic diagram of a wireless multi-stream bidirectional video processing system according to the present invention.
FIG. 3 is another schematic diagram of a wireless multi-stream bidirectional video processing system according to the present invention.
FIG. 4 is a block diagram of a wireless multi-stream bidirectional video processing system according to a first embodiment of the present invention.
FIG. 5 is a block diagram of a wireless multi-stream bidirectional video processing system according to a second embodiment of the present invention.
FIG. 6 is a block diagram of a wireless multi-stream bidirectional video processing system transmitting signals from a camera end to a host device end according to the first embodiment of the present invention;
FIG. 7 is a block diagram of a wireless multi-stream bidirectional video processing system transmitting signals from a host device end to a display end according to the first embodiment of the present invention; and
FIG. 8 is a diagram of an application scenario according to the second embodiment of the present invention.

### DETAILED DESCRIPTION OF THE PREFERRED EMBODIMENT

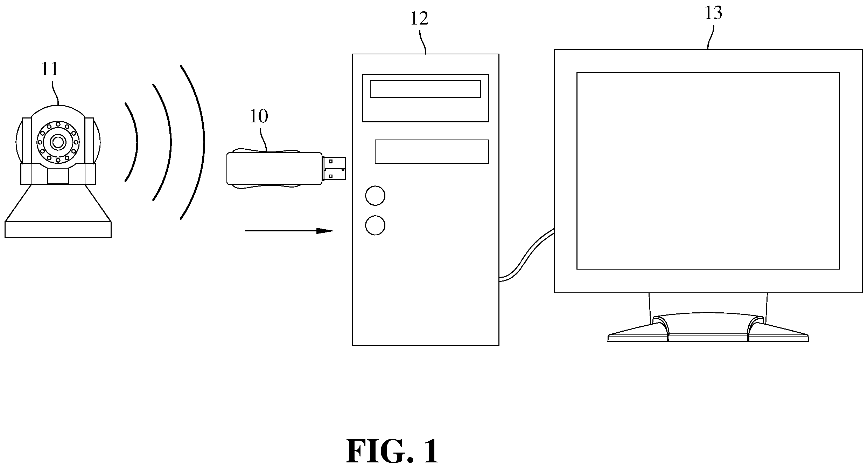

Please refer to FIG. 1, which is a schematic diagram of a conventional wireless video transmission device. A conventional video transmission system includes a wireless video transmission device 10, a wireless device 11, a host device 12, and a display device 13. The wireless device 11 is a wireless device for transmitting video information. In addition to the wireless device 11, the source of the video information can also be other sources on the Internet, such as a video player, etc., depending on actual needs. That is, the wireless device 11 may be a network camera device or a camera device equipped with a wireless communication unit. If the camera device is a network camera device, the wireless video transmission device 10 is connected to the Internet through a wireless communication unit and then connected thereto, unlike the wireless device 11 with a wireless communication unit in FIG. 1, which can be directly connected via Wi-Fi.

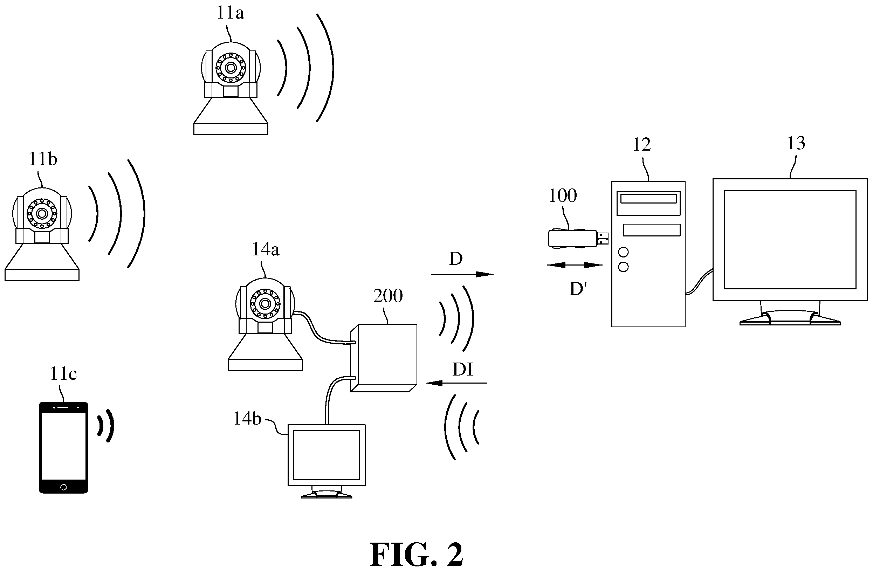

Please refer to FIG. 2, which is a schematic diagram of a wireless multi-stream bidirectional video processing system 1 according to the present invention. The wireless multi-stream bidirectional video processing system 1 of the present invention includes a video processing device 100 and a video input and output device 200. In the first direction of transmitting signals from the camera end to the host device end, the video input and output device 200 receives the camera video from the camera device 14a and performs first processing to the camera video to become video information D. The video processing device 100 is wirelessly connected to the video input and output device 200 to receive the video information D, perform a second processing to the video information D to become an output video D', and transmit the output video D' to the host device 12 . In addition, in the second direction of transmitting signals from the host device end to the display end, the host device 12 outputs a display video to the video processing device 100. Next, the video processing device 100 performs a third processing to the display video to form display information DI, and transmits it to the video input and output device 200. Finally, the video input and output device 200 performs a fourth processing to the display information DI to become a device video, and displays the device video on the display device 14b connected to the video input and output device. Preferably, Wi-Fi protocol is used for connection, but the present invention is not limited thereto. Specifically, the camera device 14a can be any device with a camera function, which can be connected to the video input and output device 200 in a wireless or wired manner. The camera device 14a includes, but is not limited to panoramic cameras, cameras with pan/tilt/zoom (PTZ) functions, mobile phones and other devices with camera functions. In addition, a plurality of camera devices 14a of any type may be connected to the video input and output device 200 to receive different videos from the camera devices 14a. Specifically, the display device 14b includes but is not limited to a smart TV, a smart projector, a mobile phone, a tablet, etc. In addition, a plurality of display devices 14b of any type can be connected to the video input and output device 200 to play device videos on the display devices 14b simultaneously.

It can be understood that in the wireless multi-stream bidirectional video processing system 1 of the present invention, in addition to the video processing device 100, the video input and output device 200 can also be wirelessly connected to a plurality of wireless devices 11a to 11c, so as to wirelessly receive videos from the wireless devices 11a to 11c. Alternatively, the video processing device 100 may also be wirelessly connected to the wireless devices 11a to 11c to wirelessly receive videos from the wireless devices 11a to 11c.

Therefore, it can be understood that the videos received by the wireless multi-stream bidirectional video processing system 1 of the present invention may include but are not limited to any processed or unprocessed videos. For example, the processed video may include video processed by a wireless device with video processing capabilities. This processing includes, but is not limited to, picture-in-picture, picture-by-picture, picture cropping, picture overlapping, picture zooming in and out, and other processing. In addition, the processed videos may also have various resolutions, specifications, ratios, etc. In addition, for example, the unprocessed videos may include, but are not limited to, videos with various resolutions, specifications, and proportions captured by various different camera devices. It can be understood that the present invention does not limit the quantity of received videos, and the wireless multi-stream bidirectional video processing system 1 may wirelessly receive one or more videos.

In addition, the wireless multi-stream bidirectional video processing system 1 of the present invention has a bidirectional transmission function. That is, it can transmit information from the wireless devices 11a, 11b, 11c and the camera devices 14a to the host device 12 and transmit information from the host device 12 to the display device 14b.

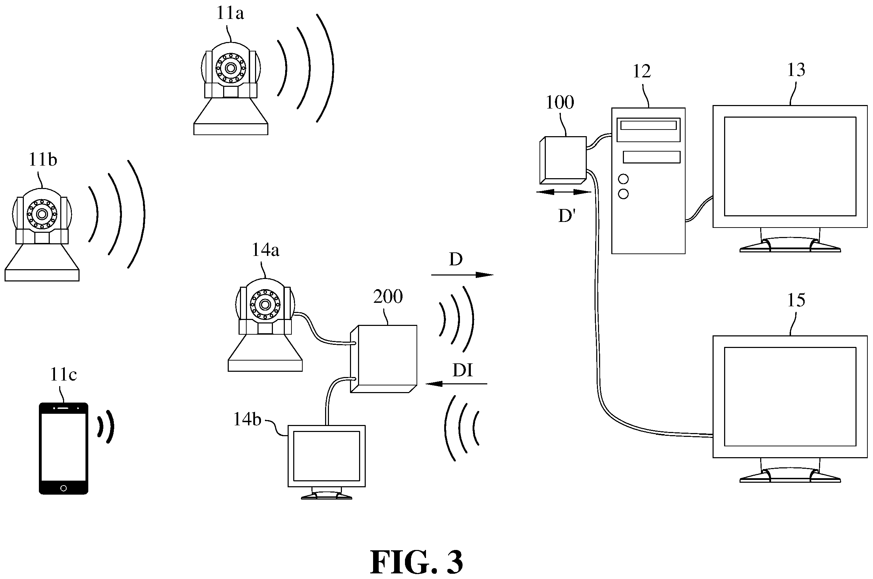

FIG. 3 is another schematic diagram of the wireless multi-stream bidirectional video processing system 1 according to the present invention. In FIG. 2, the video processing device 100 is a dongle directly connected to the host device 12, but the invention is not limited thereto. As shown in FIG. 3, the video processing device 100 may also be a device box with other connection ports. For example, the video processing device 100 may include an output connection port connected to the display device 15. Further, in other embodiments, the video processing device 100 may include an input connection port connected to another host device.

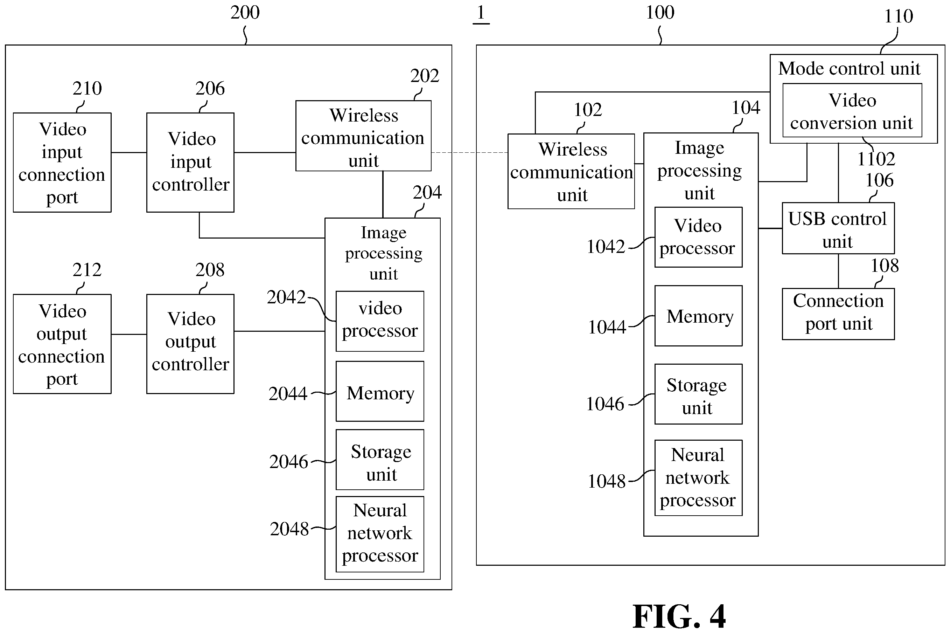

FIG. 4 is a block diagram of the wireless multi-stream bidirectional video processing system 1 according to the first embodiment of the present invention. Please refer to FIGs. 2 and 4, in the first embodiment of present application, the wireless multi-stream bidirectional video processing system 1 includes the video processing device 100 and the video input and output device 200.

Specifically, the video processing device 100 includes: a wireless communication unit 102 for performing wirelessly connection, so as to receive video information and transmitting display information to the video input and output device 200, wherein the dotted line in the drawings represents the wireless connection between the wireless communication unit 102 and a wireless communication unit 202 of the video input and output device 200; an image processing unit 104 for processing the video information D to become output videos D'; a USB control unit 106 for receiving the output videos D', and according to the quantity of the output videos D' and display videos received from the host device 12, providing a plurality of endpoints for the host device 12; a connection port unit 108 for receiving the output videos D' from the USB control unit 106, so as to transmit the output videos D' to the host device 12; and a mode control unit 110 for receiving the display videos from the host device 12 and converting the display videos into display information DI. Specifically, the video processing device 100 is connected to the host device 12 through the connection port unit 108, and the supported format of the connection port unit 108 may be USB 2.0, USB 3.0, USB Type-C, multi-cable connection port, or customized ports, but not limited thereto.

In addition, the image processing unit 104 includes: a video processor 1042; a memory 1044; a storage unit 1046; and a neural network processor 1048, which uses an artificial intelligence engine to adaptively assist the image processing of the image processing unit 104. The video processor 1042 and the neural network processor 1048 use a program stored in the storage unit 1046 to execute the video display mode, and the memory 1044 is used to store the video information D and the output videos. Specifically, the memory 1044 and the storage unit 1046 may include any form of memory, including but not limited to RAM.

In addition, the mode control unit 110 includes a video conversion unit 1102 for converting and compressing the display videos.

Specifically, the video input and output device 200 includes: a wireless communication unit 202 for performing wirelessly connection, so as to transmit video information D to the video processing device 100 and receive video information and display information DI; an image processing unit 204 for performing first processing to the camera videos and performing a fourth processing to the display information DI; a video input controller 206 for controlling the received camera videos; a video output controller 208 for controlling the device video that is to be wireless or wired outputted to the display device 14b; a video input connection port 210 for receiving the camera video from a camera device 14a and for transmitting the received camera video to the video input controller 206; and a video output connection port 212 for receiving the device video from the video output controller 208 and for transmitting the received device video to the display device 14b.

In addition, the image processing unit 204 includes: a video processor 2042; a memory 2044; a storage unit 2046; and a neural network processor 2048, which uses an artificial intelligence engine to adaptively assist the image processing of the image processing unit 204. The video processor 2042 and the neural network processor 2048 use a program stored in the storage unit 2046 to perform image processing, and the memory 2044 is used to store the camera videos and the device videos. Specifically, the memory 2044 and the storage unit 2046 may include any form of memory, including but not limited to RAM.

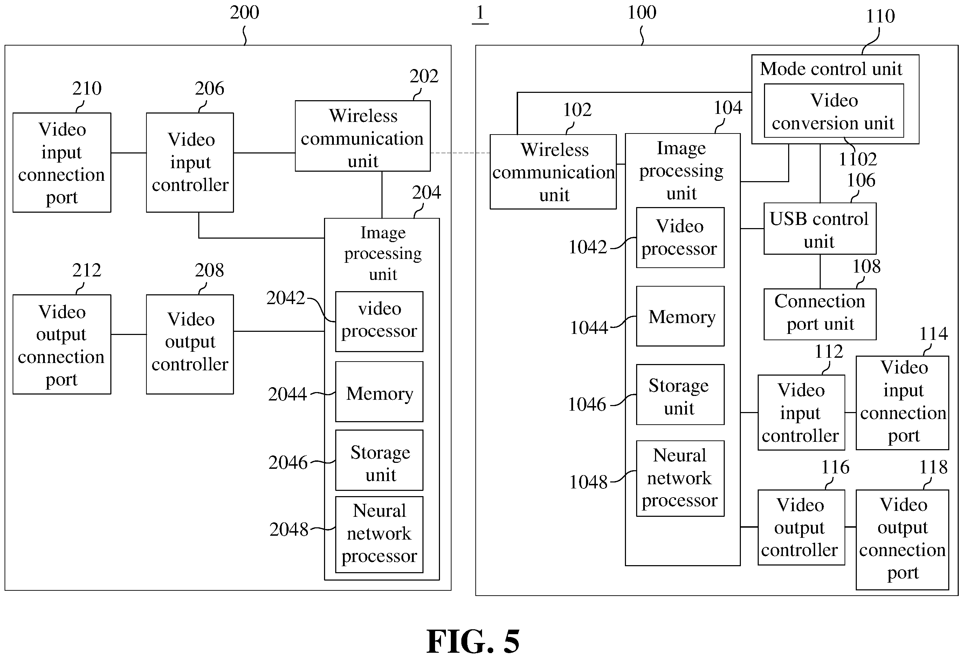

FIG. 5 is a block diagram of the wireless multi-stream bidirectional video processing system 1 according to the second embodiment of the present invention. Please refer to FIGs. 3 and 5, the difference between the second embodiment and the first embodiment of the present application is that the video processing device 100 further includes: a video input controller 112 for controlling the received camera videos; a video input connection port 114 for receiving video from the host device 12 or another host device to transmit the video to the video input controller 112; a video output controller 116 for controlling the device video output to the display device 15; and a video output connection port 118 for receiving the video from the video output controller 116 and outputting the video to the display device 15.

It can be understood that in the second embodiment of the present application, the video processing device 100 can receive videos from a plurality of host devices, and can be connected to the display device 15 to output device videos from the display device 15. That is, the supported format of the video input connection port 114 may be HDMI, DP, or customized ports, but not limited thereto.

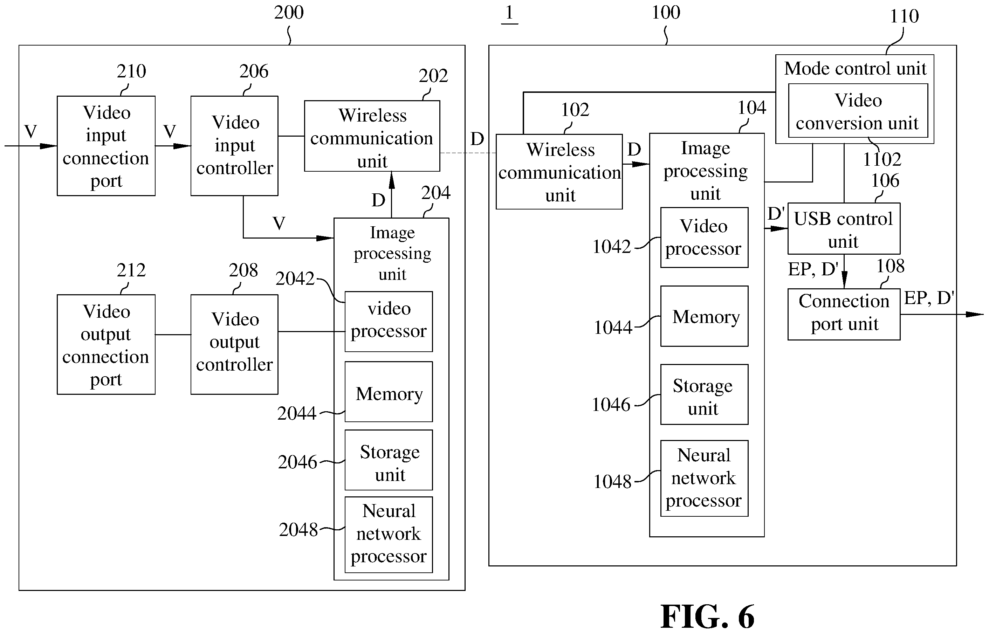

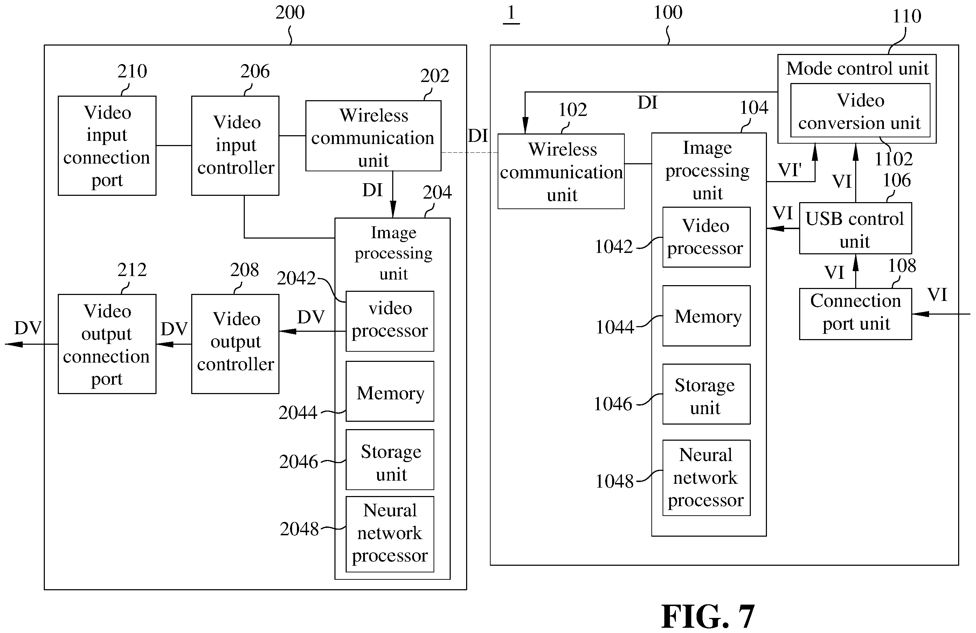

The bidirectional transmission of the present invention will be further described below with reference to FIGs. 6 and 7. It can be understood that the wireless multi-stream bidirectional video processing system 1 of the present invention can be used for two-way transmission of signals. The first direction is the direction in which the camera end transmits signals to the host device end, and the second direction is the direction in which the host device end transmits signals to the display device end.

FIG. 6 is a block diagram of the wireless multi-stream bidirectional video processing system 1 transmitting signals from the camera end to the host device end according to the first embodiment of the present invention. Please refer to FIG. 6, when the wireless multi-stream bidirectional video processing system 1 transmits signals from the camera end to the host device end, the following components of the wireless multi-stream bidirectional video processing system 1 will perform corresponding functions: the video input connection port 210 receives the camera video V from the camera device 14a to transmit it to the video input controller 206; the video input controller 206 is used to control the received camera video V and transmit it to the image processing unit 204; the image processing unit 204 performs first processing to the camera video V to become video information D, and transmit it to the wireless communication unit 202; the wireless communication unit 202 wirelessly transmits the video information D to the wireless communication unit 102; the wireless communication unit 102 wirelessly receives the video information D from the wireless communication unit 202; the image processing unit 104 performs second processing to the video information D to become the output video D'; the USB control unit 106 receives the output video D' and reports endpoint information EP to the host device 12 according to the output video D', and provide a plurality of endpoints to the host device 12 according to the quantity of output videos D'; and the connection port unit 108 receives the output video D' and the endpoint information EP from the USB control unit 106 to transmit the output video D' and the endpoint information EP to the host device 12.

The first processing will be described in detail below.

Specifically, the first processing of the image processing unit 204 includes performing the first processing on the camera video V according to the selected video display mode. The video display mode includes, but is not limited to, picture-in-picture, side-by-side, cropping, overlapping, zooming in and out, original picture, etc. It can be understood that when the video display mode that is selected is the original picture, the image processing unit 204 may not process the camera video V and directly output the camera video V as the video information D. In addition, the video display mode may also include processing the incoming video using AI algorithms through the neural network processor 2048. The AI algorithms may include computer vision algorithms for video processing, such as edge detection, image segmentation, voice direction detection, and feature extraction. Also, the AI algorithms may include person detection algorithms used to identify and locate people in the video, such as attendees' faces, human body shapes, human voices or other objects of interest. In addition, the person detection algorithms are used to identify and locate people in the screen or image. Also, once a person is identified, the AI algorithms use motion tracking technology to track the person's movement over time. That is, the processing of the image processing unit 204 may be based on the results of the AI computing, such as edge detection, image segmentation, voice direction detection, feature extraction, capturing body shapes, identifying persons, or arranging an image output based on the direction of human voices. In addition, the image processing unit 204 may also process the videos in different video display modes. For example, the first camera video is processed in the first video display mode, and the second camera video is processed in the second video display mode. However, the present invention is not limited thereto. In addition, the first processing of the image processing unit 204 further includes compression processing. That is, the image processing unit 204 compresses the camera video V into video information D to facilitate wireless transmission.

The second processing will be described in detail below.

Specifically, the second processing of the image processing unit 104 includes a video display mode, that is, the image processing unit 104 performs the second processing to the video information D according to the selected video display mode, so as to transmit the output video D' to the host device 12. Specifically, the image processing unit 104 processes the video information D according to the selected video display mode. The video display mode includes, but is not limited to, picture-in-picture, side-by-side, cropping, overlapping, zooming in and out, original picture, etc. It can be understood that when the video display mode that is selected is the original picture, the image processing unit 104 may not process the video information D and directly output video information D as the output video D'. In addition, the video display mode may also include processing the incoming video using AI algorithms through the neural network processor 1048. The AI algorithms may include computer vision algorithms for video processing, such as edge detection, image segmentation, voice direction detection, and feature extraction. Also, the AI algorithms may include person detection algorithms used to identify and locate people in the video, such as attendees' faces, human body shapes, human voices or other objects of interest. In addition, the person detection algorithms are used to identify and locate people in the screen or image. Also, once a person is identified, the AI algorithms use motion tracking technology to track the person's movement over time. That is, the processing of the image processing unit 104 may be based on the results of the AI computing, such as edge detection, image segmentation, voice direction detection, feature extraction, capturing body shapes, identifying persons, or arranging an image output based on the direction of human voices. In addition, the image processing unit 104 may also process the videos in different video display modes. For example, the first video information is processed in the first video display mode, and the second video information is processed in the second video display mode. However, the present invention is not limited thereto.

For example, assuming that the video information D is a video captured by a panoramic camera and the captured video includes five people, the image processing unit 104 identifies the five people respectively according to the selected video display mode, and output five cropped videos tracking the five characters and the original panoramic video. Therefore, the image processing unit 104 processes the video D1 and outputs six output videos D'. Therefore, according to the selected video display mode, the image processing unit 104 outputs multiple output videos D' in a multi-stream manner. Or, for example, according to another selected video display mode, the plurality of video information may all be displayed as one video in the side-by-side mode, so the image processing unit 104 may output one output video D'.

Accordingly, the USB control unit 106 receives at least one output video D', so as to report the endpoint information EP to the host device 12 based on the at least one output video D'. For example, assuming that the image processing unit 104 outputs six output videos D', the endpoint information EP reported by the USB control unit 106 is six endpoints, so that the host device 12 prepares the channels to transmit six videos, and so on.

In addition, the second processing further includes format processing and resolution processing. When the image processing unit 104 receives the video information D and processes the video information D to become the output video D', the image processing unit 104 simultaneously convert the video information D into a format that complies with the USB Video Class (UVC), so that the connection port unit 108 is capable of transmitting the output video D'. For example, if the format of the video D of the wireless device 11 is a non-UVC format, such as a Real Time Streaming Protocol (RTSP) stream, the image processing unit 104 performs format processing to convert the format into UVC format. Also, for example, if the format of the video information D is the UVC format, generally the most common technology is the Motion Joint Photographic Experts Group (MJPEG) format, the image processing unit 104 does not perform format processing. In addition, in other embodiments, the host device 12 and the display device 13 may be an integrated device with a display function, such as a mobile phone, a tablet, a notebook computer, or any portable device.

In addition, the second processing further includes resolution processing. If the video information D has a first resolution (for example, 1080p), and the resolution of the host device 12 is set to a second resolution (for example, 720p). The image processing unit 104 performs resolution processing, such as scaling, on the video D to adjust the output video D' to the second resolution. It should be noted that the second resolution may be larger than the first resolution depending on actual requirements. For example, the second resolution is 4Kp, which is larger than the first resolution of 1080p.

Compared with the previous technology, since the UVC driver is a generic driver that is preinstalled in most operating systems, the video processing device 100 and the video input and output device 200 do not need to additionally install, execute or configure a specific driver to receive the connected video on the host device 12, which can avoid driver compatibility issues, reduce the difficulty of use and improve convenience. In actual application, users may use flexibly transmit content from various devices and media equipment through any wireless device, and the video processing device 100 may automatically adjust the resolution settings through video processing according to the resolution of the host device 12, and configured the format of the display video as needed.

FIG. 7 is a block diagram of the wireless multi-stream bidirectional video processing system 1 transmitting signals from the host device end to the display end according to the first embodiment of the present invention. Please refer to FIG. 7, when the host device transmits signals to the display, the following components of the wireless multi-stream bidirectional video processing system 1 will perform corresponding functions: the connection port unit 108 receives the display video VI from the host device 12, so as to transmit the display video VI to the USB control unit 106; the USB control unit 106 receives the display video VI from the connection port unit 108, so as to transmit the display video VI to the mode control unit 110 or the image processing unit 104, and provides endpoints for the host device 12 according to the quantity of the output video D' and the display video VI; the image processing unit 104 performs a third processing to the display video VI to become the display video VI'; the mode control unit 110 adjusts the display video VI or the display video VI' to become display information DI, and transmits the display information DI to the wireless communication unit 202 through the wireless communication unit 102; the wireless communication unit 202 receives the display information DI from the wireless communication unit 102 and transmits the display information DI to the image processing unit 204; the image processing unit 204 performs a fourth processing on the display information DI to become the device video DV, and transmit the device video DV to the video output controller 208; the video output controller 208 is used to control the output of the device video DV, and transmit the device video DV to the display device 14b connected to the video output connection port 212.

It can be understood that the display video VI is any video set by the user. For example, the user uses the received output video D' to generate the display video VI in the host device 12.

Here, the manner in which the USB control unit 106 provides endpoints will be specifically described. The USB control unit 106 provides endpoints for the host device 12 according to the quantity of output videos D' and display videos VI. For example, when the quantity of output videos D' received by the USB control unit 106 is N output videos D' (N is any positive integer) and the host device 12 does not output any display video VI, the USB control unit 106 provides N endpoints so that host device 12 can receive N output videos D' simultaneously. When the USB control unit 106 does not receive any output video D' and the host device 12 outputs M display videos VI (M is any positive integer), the USB control unit 106 provides M endpoints to the host device 12 so that the host device 12 can transmit M display videos VI at the same time. When the quantity of output videos D' received by the USB control unit 106 is N output videos D' and the host device 12 outputs M display videos VI, the USB control unit 106 provides N+M endpoints to the host device 12, Therefore, the host device 12 can simultaneously receive N output videos D' and transmit M display videos VI.

Specifically, the third processing of the image processing unit 104 includes the video display mode. The image processing unit 104 performs the third processing to the display video VI according to the selected video display mode to transmit the display video VI to the mode control unit 110. Specifically, the image processing unit 104 processes the display video VI according to the selected video display mode. The video display mode includes, but is not limited to, picture-in-picture, side-by-side, cropping, overlapping, zooming in and out, original picture, etc. In addition, the video display mode may also include processing the incoming video using AI algorithms through the neural network processor 1048. The AI algorithms may include computer vision algorithms for video processing, such as edge detection, image segmentation, voice direction detection, and feature extraction. Also, the AI algorithms may include person detection algorithms used to identify and locate people in the video, such as attendees' faces, human body shapes, human voices or other objects of interest. In addition, the person detection algorithms are used to identify and locate people in the screen or image. Also, once a person is identified, the AI algorithms use motion tracking technology to track the person's movement over time. That is, the processing of the image processing unit 104 may be based on the results of the AI computing, such as edge detection, image segmentation, voice direction detection, feature extraction, capturing body shapes, identifying persons, or arranging an image output based on the direction of human voices. In addition, the image processing unit 104 may also process the video information in different video display modes. For example, the image processing unit 104 adds the temporarily stored cropped video of the person to at least one display video VI, and transmits the processed at least one display video to the mode control unit 110. For another example, the first display video is processed in the first video display mode, and the second display video is processed in the second video display mode. However, the present invention is not limited to this.

It can be understood that in the second embodiment, the image processing unit 104 can directly generate the device video DV according to the display video VI, and output the device video DV to the video output controller 116, so as to output the device video DV through the video output connection port 118 to the display device 15. That is, in the second embodiment, the wireless multi-stream bidirectional video processing system 1 can play the device video DV through at least one of the display device 15 or the display device 14b according to the user's settings.

The adjustment of the display video VI or the display video VI' by the mode control unit 110 will be described in detail below.

Specifically, the video conversion unit 1102 in the mode control unit 110 adjusts the display videos VI and VI' according to a format reply signal, so as to become the display information DI. Then, the mode control unit 110 transmits the display information DI through the wireless communication unit 102 to the wireless communication unit 202 of the video input and output device 200. The format reply signal may include but is not limited to display format information, compression format information, transmission format information, etc. of the display device 14b.

Accordingly, the adjustment includes adjusting the format of the display videos VI and VI' to the format of the target display device and compressing the adjusted format of the display video VI to the at least one display information DI, so as to facilitate wireless transmission.

The fourth processing will be described in detail below.

Specifically, the fourth processing of the image processing unit 204 includes performing the fourth processing on the display information DI according to the selected video display mode. The video display mode includes, but is not limited to, picture-in-picture, side-by-side, cropping, overlapping, zooming in and out, original picture, etc. It can be understood that when the video display mode that is selected is the original picture, the image processing unit 204 may not process the display information DI and directly output the display information DI as the device video DV In addition, the video display mode may also include processing the incoming video using AI algorithms through the neural network processor 2048. The AI algorithms may include computer vision algorithms for video processing, such as edge detection, image segmentation, voice direction detection, and feature extraction. Also, the AI algorithms may include person detection algorithms used to identify and locate people in the video, such as attendees' faces, human body shapes, human voices or other objects of interest. In addition, the person detection algorithms are used to identify and locate people in the screen or image. Also, once a person is identified, the AI algorithms use motion tracking technology to track the person's movement over time. That is, the processing of the image processing unit 204 may be based on the results of the AI computing, such as edge detection, image segmentation, voice direction detection, feature extraction, capturing body shapes, identifying persons, or arranging an image output based on the direction of human voices. In addition, the image processing unit 204 may also process the videos in different video display modes. For example, the first display information is processed in the first video display mode, and the second display information is processed in the second video display mode. However, the present invention is not limited thereto. In addition, the fourth processing of the image processing unit 204 further includes decompression processing. That is, the image processing unit 204 decompresses the display information DI into display video DV to facilitate wireless transmission.

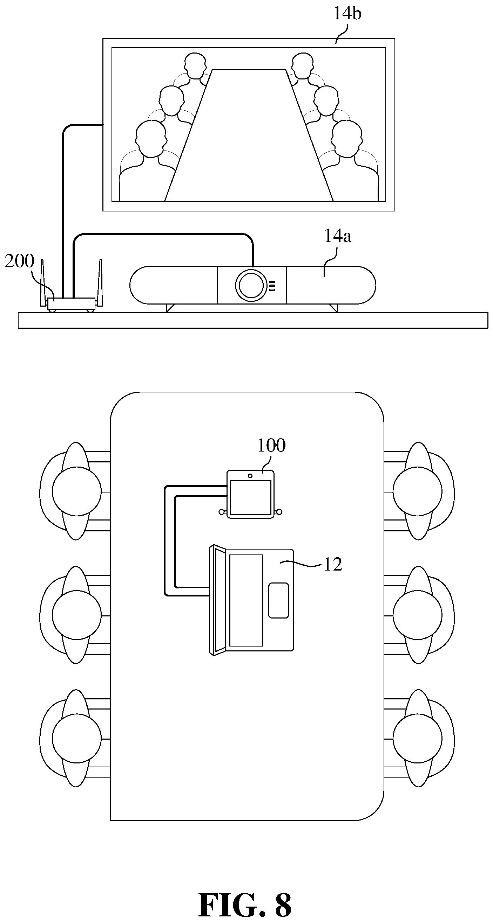

FIG. 8 is a diagram of an application scenario according to the second embodiment of the present invention. That is, in order to more precisely convey the application scenario of the present invention, the application scenario in FIG.8 is based on the second embodiment of the present invention.

Referring to FIG.8, the application scenario is related to a video conference situation using the video processing device 100 and the video input and output device 200 of the wireless multi-stream bidirectional video processing system 1. That is, the video processing device 100 is connected to the host device 12 through two ports, i.e., the connection port unit 108 and the video input connection port 114. For example, the connection port unit 108 may be connected to the video processing device 100 through a USB connection line and the video input connection port 114 may be connected to the video processing device 100 through a HDMI connection line. Further, the video input and output device 200 is connected to the camera device 14a and the display device 14b. That is, the video input and output device 200 is connected to the camera device 14a through the video input connection port 210 and is connected to the display device 14b through the video output connection port 212.

In the application scenario of FIG. 8, the wireless multi-stream bidirectional video processing system 1 is used for video conferencing. Thus, the camera video from the camera device 14a is transferred to the host device 12, and transferred through Internet so that a host device in a different conference room may receive the camera video of the present conference room. Further, the camera video from the different conference may be transmitted to the present conference room through Internet, transferred to the video processing device 100 through the HDMI connection line or the USB connection line, transferred to the video input and output device 200, and finally displayed on the display device 14b. That is, the video displayed on the display device 14b may be from the different conference room, so that the people in the two conferences rooms may conduct a video conference.

Accordingly, the video processing device of the present invention has the function of bidirectional signal transmission. By using the configuration of endpoints, the video processing device can more conveniently receive videos from multiple wireless devices and simultaneously transmit the videos from the host device to a display device with a playback display function.

The present invention is not limited to the above-described embodiments. It is obvious to those skilled in the art that various modifications and changes may be made to the present invention without departing from the spirit or scope of the present invention.

Therefore, the present invention is intended to cover modifications and changes made to the present invention or falling within the scope of the appended patent applications and their equivalents.

## Claims

1. A wireless multi-stream bidirectional video processing system comprising:
a video input and output device receiving at least one camera video from at least one camera device and performing a first processing to the at least one camera video to become a video information; and
a video processing device wirelessly communicating with the video input and output device to receive the video information, performing a second processing to the video information to become a plurality of output videos, and transmitting the output videos to a host device,
wherein the host device outputs at least one display video to the video processing device, and
wherein the wireless multi-stream bidirectional video processing system processes the at least one display video to become a device video, and displays the device video on a display device connected to the wireless multi-stream bidirectional video processing system.

2. The wireless multi-stream bidirectional video processing system according to claim 1,
wherein the video processing device provides a plurality of endpoints for the host device according to a quantity of the output videos and the at least one display video, so as to transmit the output videos to the host device and receive the at least one display video from the host device, and
wherein the host device generates the at least one display video according to the output videos.

3. The wireless multi-stream bidirectional video processing system according to claim 1, wherein the video processing device comprises:
a wireless communication unit wirelessly receiving the video information from the video input and output device and transmitting a display information to the video input and output device;
an image processing unit performing the second processing to the video information to become the output videos;
a USB control unit receiving the output videos, reporting an endpoint information to the host device according to the output videos, and receiving the at least one display video, so as to provide a plurality of endpoints for the host device according to the quantity of the output videos and the at least one display video;
a connection port unit receiving the output videos from the USB control unit to transmit the output videos to the host device, and receiving the at least one display video from the host device to transmit the at least one display video to the USB control unit; and
a mode control unit adjusting the at least one display video received from the host device to become the display information.

4. The wireless multi-stream bidirectional video processing system according to claim 3,
wherein the image processing unit of the video processing device includes a video processor, a neural network processor, a memory, and a storage unit, and
wherein the video processor and the neural network processor use a program stored in the storage unit to perform the processing, and the memory is used to store the at least one video and the output videos,
wherein the processing is based on results of AI computing of the neural network processor, and
wherein the AI computing includes at least one of edge detection, image segmentation, voice direction detection, feature extraction, capturing body shapes, identifying persons, and arranging an image output based on the direction of human voices.

5. The wireless multi-stream bidirectional video processing system according to claim 4, wherein the mode control unit includes:
a video conversion unit for adjusting the at least one display video,
wherein the mode control unit receives the at least one display video from the USB control unit, and
wherein the adjustment includes adjusting a format of the at least one display video and compressing the at least one display video after the format adjusting into the at least one display information, so as to facilitate wireless transmission.

6. The wireless multi-stream bidirectional video processing system according to claim 5,
wherein, before the mode control unit adjusts the at least one display video, the image processing unit of the video processing device performs a third processing to the at least one display video,
wherein the third processing of the at least one display video includes at least one video display mode, the image processing unit of the video processing device performs the third processing to the at least one display video according to the video display mode that is selected, and
wherein the video display mode includes picture-in-picture, side-by-side picture, picture cropping, picture overlapping, picture zoom-in and zoom-out, and original picture.

7. The wireless multi-stream bidirectional video processing system according to claim 6,
wherein the display device is connected to the video processing device,
wherein the third processing further includes processing the at least one display video to become the device video, and
wherein the video processing device further includes:
a video input controller for controlling a video received from another host device;
a video output controller for controlling the device video output to the display device;
a video input connection port for receiving the video from the another host device to transmit the video to the video input controller; and
a video output connection port for receiving the device video from the image processing unit to transmit the device video to the display device.

8. The wireless multi-stream bidirectional video processing system according to claim 1,
wherein the second processing includes at least one video display mode, the image processing unit of the video processing device performs the second processing to the at least one video according to the video display mode that is selected, and
wherein the video display mode includes picture-in-picture, side-by-side picture, picture cropping, picture overlapping, picture zoom-in and zoom-out, and original picture.

9. The wireless multi-stream bidirectional video processing system according to claim 8, wherein the second processing further includes:
a format processing for converting a format of the received at least one video into a format that complies with a USB video class, so as to allow the connection port unit to transmit the output videos; and
a resolution processing for converting a resolution of the received at least one video into a resolution consistent with the host device.

10. The wireless multi-stream bidirectional video processing system according to claim 1,
wherein the display device is connected to the video input and output device, and
wherein the video input and output device includes:
a wireless communication unit for wirelessly transmitting the video information to the video processing device and receiving the display information from the video processing device;
an image processing unit for performing the first processing to the at least one camera video to become the video information, and performing a fourth processing to the display information to become the device video;
a video input controller for controlling the received at least one camera video;
a video output controller for controlling the device video that is output to the display device;
a video input connection port for receiving the at least one camera video from the at least one camera device to transmit the at least one camera video to the video input controller; and
a video output connection port for receiving the device video from the video output controller to transmit the device video to the display device.

11. The wireless multi-stream bidirectional video processing system according to claim 10,
wherein the image processing unit of the video input and output device includes a video processor, a neural network processor, a memory, and a storage unit,
wherein the video processor and the neural network processor use a program stored in the storage unit to perform the processing, and the memory is used to store the at least one camera video and the device videos,
wherein the processing is based on results of AI computing of the neural network processor, and
wherein the AI computing includes at least one of edge detection, image segmentation, voice direction detection, feature extraction, capturing body shapes, identifying persons, and arranging an image output based on the direction of human voices.

12. The wireless multi-stream bidirectional video processing system according to claim 10,
wherein the first processing and the fourth processing include at least one video display mode, the image processing unit of the video input and output device performs the first processing and the fourth processing according to the video display mode that is selected, and
wherein the video display mode includes picture-in-picture, side-by-side picture, picture cropping, picture overlapping, picture zoom-in and zoom-out, and original picture.
